# EUROPÄISCHE PATENTSCHRIFT

(11) **EP 1 911 630 B1**
(45) Veröffentlichungstag und Bekanntmachung des Hinweises auf die Patenterteilung: **07.10.2009**
(21) Anmeldenummer: 07019807.2
(22) Anmeldetag: 10.10.2007
(51) Int. Cl.: B60R 13/00, B60R 21/215, B60Q 1/26, B60Q 1/56, G09F 13/00, G09F 13/22

(54) **Baugruppe zur beleuchteten Darstellung eines Logos**
Component for illuminated representation of a logo
Composant destiné à l'affichage lumineux d'un logo

(30) Priorität: 12.10.2006 DE 102006048347; 02.03.2007 DE 102007010328
(43) Veröffentlichungstag der Anmeldung: 16.04.2008
(60) Teilanmeldung: 09004537.8
(73) Patentinhaber: TRW Automotive Safety Systems GmbH, 63743 Aschaffenburg (DE)
(72) Erfinder: Hirzmann, Guido, 63877 Sailauf (DE)
(74) Vertreter: Prinz & Partner

(56) Entgegenhaltungen:
- EP-A- 1 362 749
- EP-A- 1 657 125
- EP-A- 1 795 404
- DE-A1-102004 024 263
- DE-U1-202005 010 582
- JP-A- 2000 118 320

## Beschreibung

Die Erfindung betrifft eine Baugruppe zur beleuchteten Darstellung eines Logos in einem Kraftfahrzeug.

Kraftfahrzeuge sind außen und innen üblicherweise mit Emblemen versehen, die das Logo des Herstellers darstellen. Hierzu ist das Logo entweder auf einem flächigen Emblem abgebildet, oder das Emblem selbst hat die Form des Logos oder wenigstens Strukturen, die das Logo darstellen.

Das Gefühl für die Wertigkeit eines Fahrzeuginnenraums kann durch die Beleuchtung eines darin angeordneten Logos angehoben werden. Aus dem Stand der Technik sind mehrere Lösungen zur Beleuchtung eines Logos bekannt, die auf unterschiedlichen Techniken beruhen. Beispielhaft seien die DE-U-200 18 732, EP-A-1 000 809, JP-A-2005 215596, US-B-6 190 026, US-A-2005/0007752, US-A-2006/0023468 und WO-A-2005/016698 genannt.

Die Anbringung und Beleuchtung eines Logos auf einer Airbagabdeckung, typischerweise im zentralen Lenkradbereich, bereitet gewisse Schwierigkeiten. Bei einer Beleuchtungsbaugruppe ist zu berücksichtigen, daß sich im Falle einer Airbagauslösung weder einzelne Bauteile von der Baugruppe noch die gesamte Baugruppe von der Abdeckung lösen dürfen.

Weitere Anforderungen an eine Baugruppe zur Beleuchtung sind ein geringes Gewicht und eine geringe Bauhöhe. Außerdem ist es wünschenswert, daß bislang unbeleuchtete Embleme für einen beleuchteten Einsatz weiterhin verwendbar bleiben, so daß keine Änderungen am Design und Aufbau der Embleme erforderlich ist.

Eine Baugruppe mit den Merkmalen des Oberbegriffs des Anspruchs 1 bzw. des Anspruchs 13 ist aus der EP-A-1 657125 bekannt. Auf der dem Fahrer abgewandten Seite sind in einer ersten Acrylplatte, die auf einer weiteren, als Träger dienenden zweiten Acrylplatte angeordnet ist, mehrere Nuten eingeformt. Auf der vom Fahrer abgewandten Seite der zweiten Acrylplatte sind eine oder mehrere LEDs vorgesehen. Auf der dem Fahrer zugewandten Seite sind Teilbereiche der Oberfläche der zweiten Acrylplatte, die mit den Nuten der ersten Acrylplatte korrespondieren, als halbdurchlässige Spiegel ausgebildet, wogegen die restliche Oberfläche mit einer lichtundurchlässigen Schicht bedeckt ist.

Gemäß der einem ersten Aspekt der Erfindung umfaßt eine Baugruppe, die zur beleuchteten Darstellung eines Logos in einem Kraftfahrzeug geeignet ist, einen transparenten Träger und wenigstens eine Lichtquelle, die hinter oder neben dem Träger angeordnet ist. Der Träger weist auf einer dem Logo zugewandten Seite erhöhte Strukturen auf.

Gemäß der einem zweiten Aspekt der Erfindung umfaßt eine Baugruppe, die zur beleuchteten Darstellung eines Logos in einem Kraftfahrzeug geeignet ist, einen Träger und wenigstens eine Lichtquelle, die hinter oder neben dem Träger angeordnet ist, sowie ein das Logo darstellendes Emblem. Der Träger ist lichtundurchlässig und das Emblem transparent. Das Emblem ist auf der der Lichtquelle zugewandten Seite des Trägers angeordnet und weist erhöhte Strukturen auf, die durch den Träger hindurchragen.

Vorteilhafte und zweckmäßige Ausgestaltungen der erfindungsgemäßen Baugruppe sind in den Unteransprüchen angegeben.

Besondere Merkmale und Vorteile der Erfindung ergeben sich aus der nachfolgenden Beschreibung bevorzugter Ausführungsformen unter Bezugnahme auf die beigefügten Zeichnungen. In den Zeichnungen zeigen:
- Figur 1: eine Explosionsansicht einer nicht erfindungsgemäßen ersten Baugruppe;
- Figur 2: den Lichtleiter der ersten Baugruppe;
- Figur 3: den Träger der ersten Baugruppe;
- Figur 4: die Leiterplatte der ersten Baugruppe;
- Figur 5: den Boden der ersten Baugruppe;
- Figur 6: die im Boden aufgenommene Leiterplatte der ersten Baugruppe;
- Figur 7: eine perspektivische Schnittansicht der ersten Baugruppe;
- Figuren 7a, 7b: Detailansichten aus Figur 7;
- Figur 7c: eine geschnittene Detailansicht des Lichtaustrittsbereichs der ersten Baugruppe;
- Figur 8: eine Explosionsansicht einer nicht-erfindungsgemäßen zweiten Baugruppe;
- Figur 9: die zweite Baugruppe im zusammengebauten Zustand;
- Figur 10: eine perspektivische Schnittansicht der zusammengebauten zweiten Baugruppe;
- Figur 11: eine schematische Schnittansicht der zweiten Baugruppe;
- Figur 12: eine Explosionsansicht einer nicht-erfindungsgemäßen dritten Baugruppe;
- Figur 13: die dritte Baugruppe im zusammengebauten Zustand;
- Figur 14: eine Schnittansicht der dritten Baugruppe;
- Figur 15: eine schematische Schnittansicht der dritten Baugruppe;
- Figur 16: die Umspritzung der dritten Baugruppe;
- Figur 17: eine schematische Schnittansicht einer erfindungsgemäßen vierten Baugruppe;
- Figur 18: eine schematische Schnittansicht einer erfindungsgemäßen fünften Baugruppe; und
- Figur 19: eine schematische Schnittansicht einer erfindungsgemäßen sechsten Baugruppe.

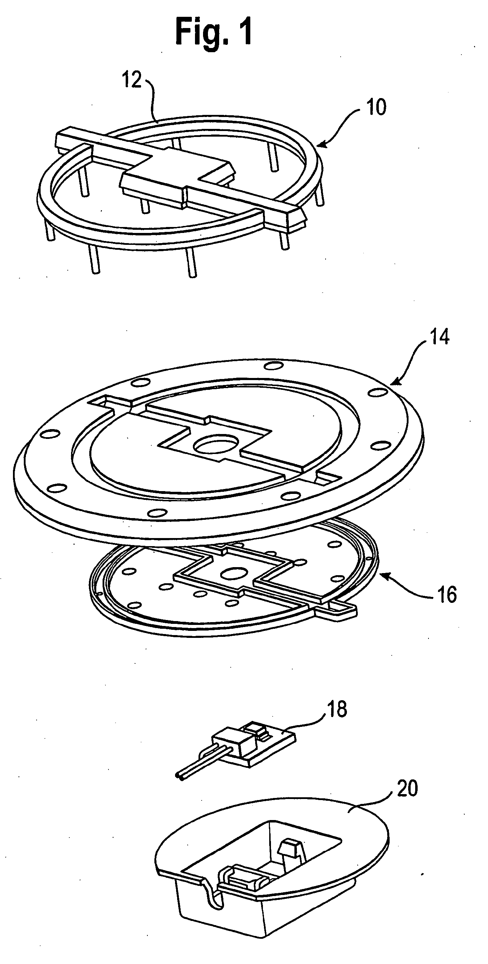

In den Figuren 1 bis 7 ist eine Baugruppe gemäß einer nicht-erfindungsgemäßen ersten Ausführungsform dargestellt. Die Baugruppe umfaßt ein lichtundurchlässiges Emblem 10, das z. B. ein Logo 12 eines Automobilherstellers zeigt, einen lichtundurchlässigen Kunststoffträger 14, einen Lichtleiter 16, eine Leiterplatte 18 mit Elektronikbauteilen und einen Boden 20.

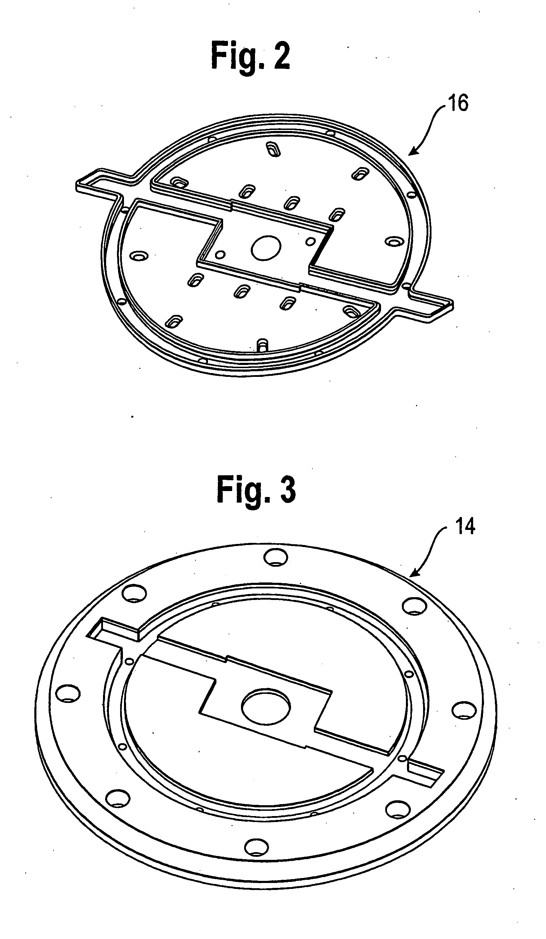

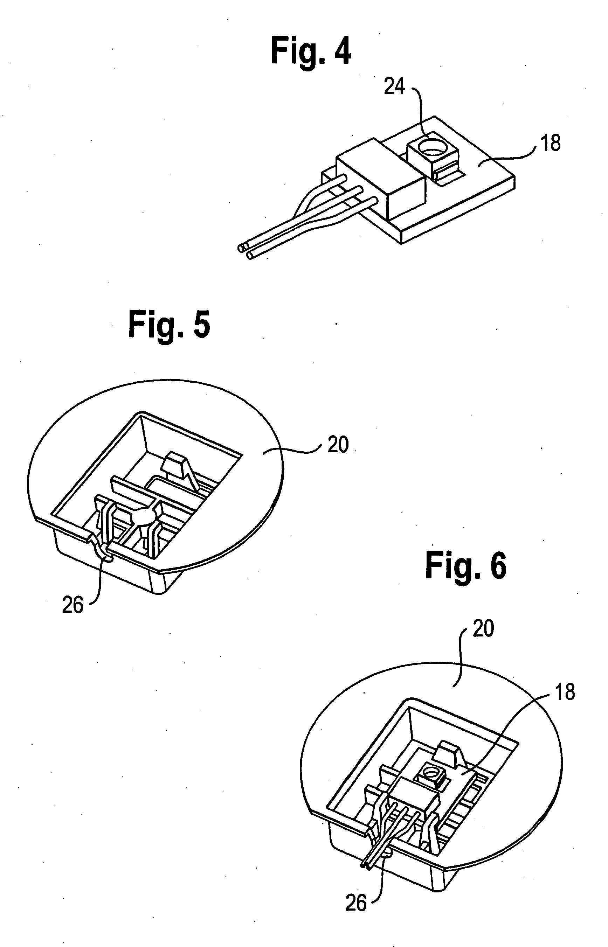

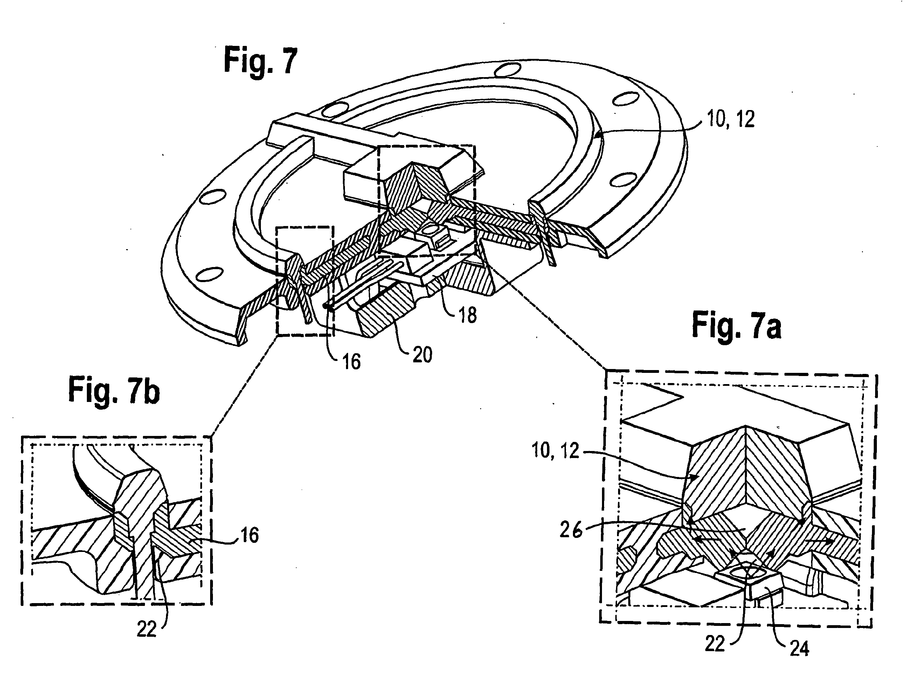

Das Emblem 10 ist ein dreidimensionales, reliefartiges massives Emblem und, ebenso wie bei den meisten der folgenden Ausführungsformen der Erfindung, im wesentlichen baugleich mit Emblemen, wie sie bislang unbeleuchtet verwendet wurden. Der in Figur 2 einzeln gezeigte Lichtleiter 16 ist ein auf die Form des Emblems 10 abgestimmtes Bauteil mit speziell angeordneten spiegelnd polierten Umlenkflächen 22 (siehe auch Detailansicht der Figur 7b). Der Lichtleiter 16 kann grundsätzlich auch aus einem anderen Material gebildet sein und ggf. eine reflektierende Beschichtung aufweisen. Der in Figur 3 einzeln gezeigte Kunststoffträger 14 für das Emblem 10 entsteht durch Umspritzen des Lichtleiters 16, vorzugsweise in einem Zweikomponentenspritzgußverfahren, wenn auch der Lichtleiter 16 ein Kunststoffteil ist. Auf der Leiterplatte 18 sind SMD-Bauteile (surface mounted devices) angeordnet (siehe Figur 4), insbesondere eine Leuchtdiode (LED) 24 als Lichtquelle. Für die Verkabelung der Leiterplatte 18 ist im Boden 20, der die Leiterplatte 18 aufnimmt und schützt, eine Aussparung 26 vorgesehen (siehe Figuren 5 und 6).

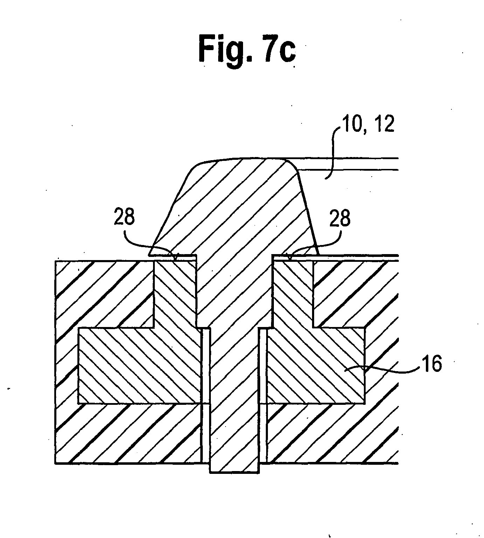

In Figur 7 ist die Baugruppe im zusammengebauten Zustand gezeigt. Die Leiterplatte 18 ist so angeordnet, daß die LED 24 zentral unter dem Emblem 10 und dem Lichtleiter 16 liegt. Die gleichmäßige Einkopplung des von der LED 24 ausgestrahlten Lichts in den Lichtleiter 16 wird durch einen als Diffusor wirkenden Kegel 26 des Lichtleiters 16 unterstützt, der direkt über der LED 24 angeordnet ist.

Wie aus Figur 7 und den Detailansichten der Figuren 7a und 7b hervorgeht, ist der Lichtleiter 16 so aufgebaut, daß das eingekoppelte Licht auf die Rückseite des Emblems 10 gerichtet wird. Dies wird durch die Umlenkflächen 22 ermöglicht, an denen das eingekoppelte Licht reflektiert wird. Der Lichtleiter 16 weist Lichtaustrittsflächen 28 auf, die den rückseitigen Randbereichen des Emblems 10 gegenüberliegen, diese aber seitlich nicht überragen (siehe Figur 7c). Da die Randbereiche des Emblems 10 nicht unmittelbar auf dem Lichtleiter 16 aufliegen, wird das Emblem 10 somit indirekt rückseitig beleuchtet. Es entsteht dabei ein Beleuchtungseffekt, der vergleichbar ist mit einer Corona.

Die Baugruppe wird - wie bislang das unbeleuchtete Emblem - mittels der Stifte des Emblems 10 an der Airbagabdeckung des Lenkrads befestigt. Dazu werden die Stifte nach dem Einsetzen in entsprechende Öffnungen der Airbagabdeckung auf deren Rückseite verschweißt, z. B. durch Ultraschallschweißen.

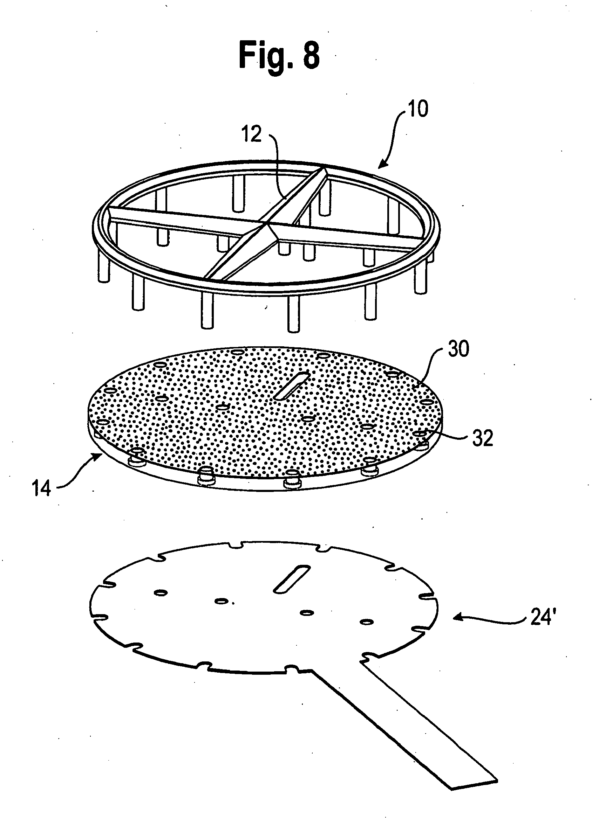

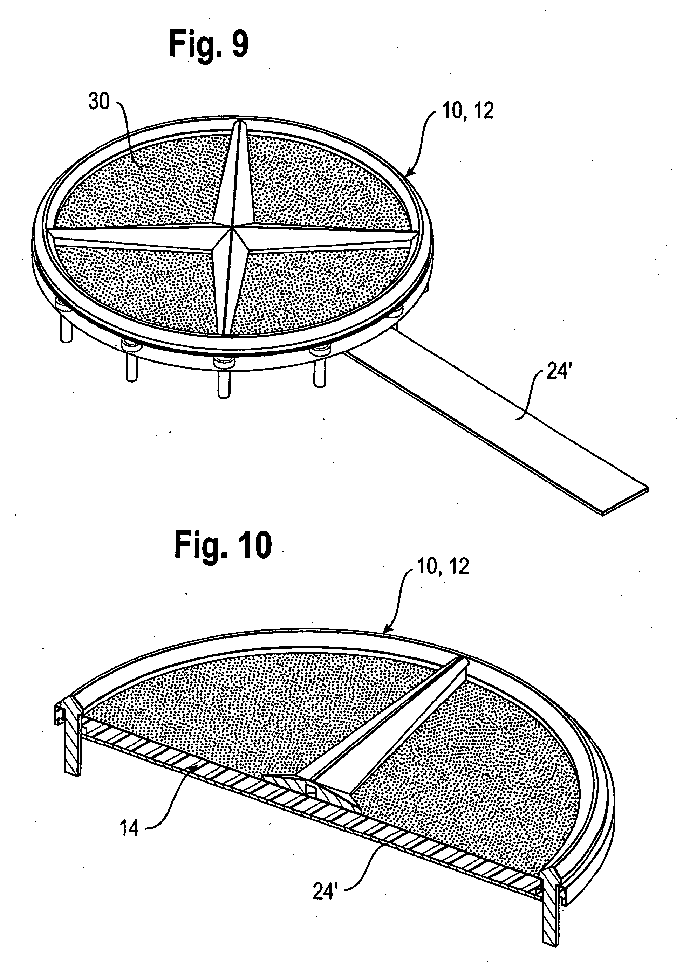

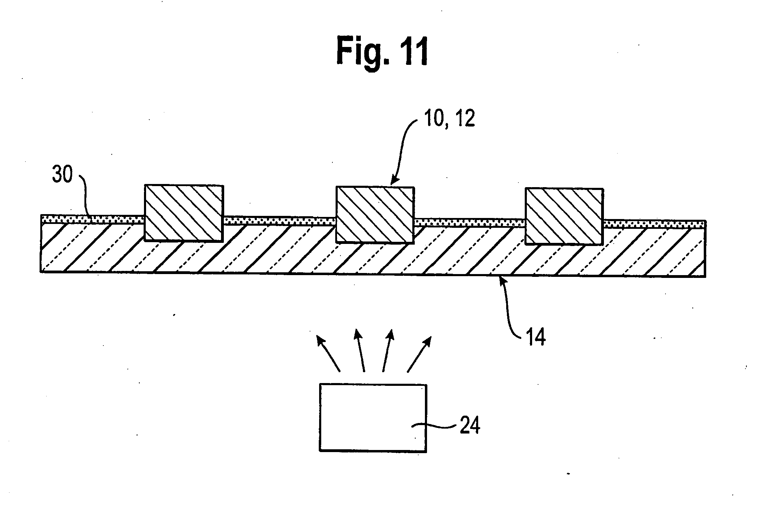

In den Figuren 8 bis 11 ist eine Baugruppe gemäß einer nicht-erfindungsgemäßen zweiten Ausführungsform der Erfindung dargestellt. Die Baugruppe umfaßt ein dreidimensionales, reliefartiges massives Emblem 10, eine Elektrolumineszenzfolie 24' als Lichtquelle und einen transparenten Kunststoffträger 14. Die Verwendung von Elektrolumineszenzfolien zur Beleuchtung von Emblemen ist an sich bekannt (siehe z. B. DE-U-298 20 304), weshalb auf den Schichtaufbau und die elektrische Anregung der Folie 24' nicht weiter eingegangen wird. Die Folie 24' und der Träger 14 sind hinsichtlich Form, Befestigungsbohrungen etc. auf das Emblem 10 abgestimmt.

Die dem Emblem 10 zugewandte Oberfläche des Trägers 14 ist mit einem an sich lichtundurchlässigen Lack 30 beschichtet. Die Lackschicht weist aber Durchbrüche 32 auf, so daß an diesen Stellen Licht durch den Träger 14 hindurchtreten kann. Die Durchbrüche 32 können nach der Beschichtung des Trägers 14 mit Hilfe eines Lasers erzeugt werden. Es sind grundsätzlich beliebige Strukturen herstellbar, z. B. feine Wabenstrukturen für eine gleichmäßige Ausleuchtung oder größere Durchbrüche 32 für eine gezielte Ausleuchtung eines bestimmten Bereichs.

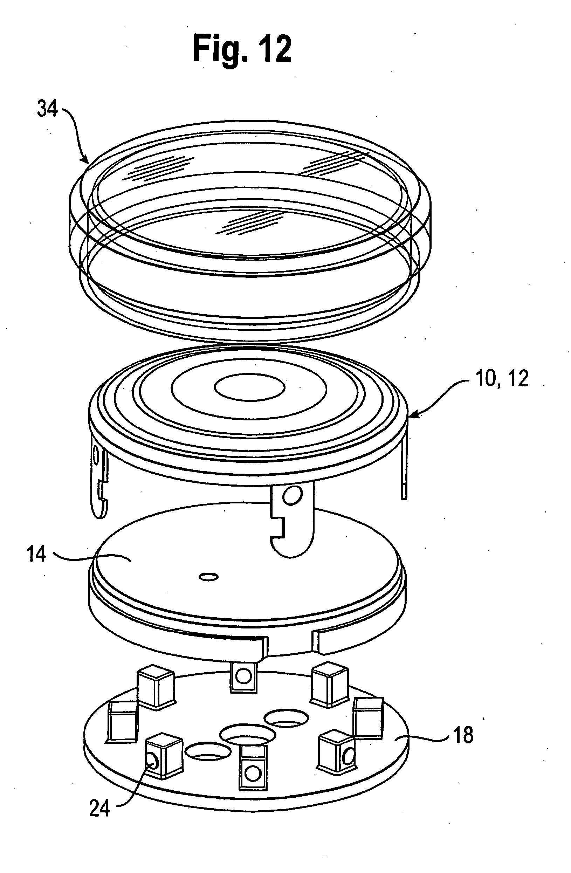

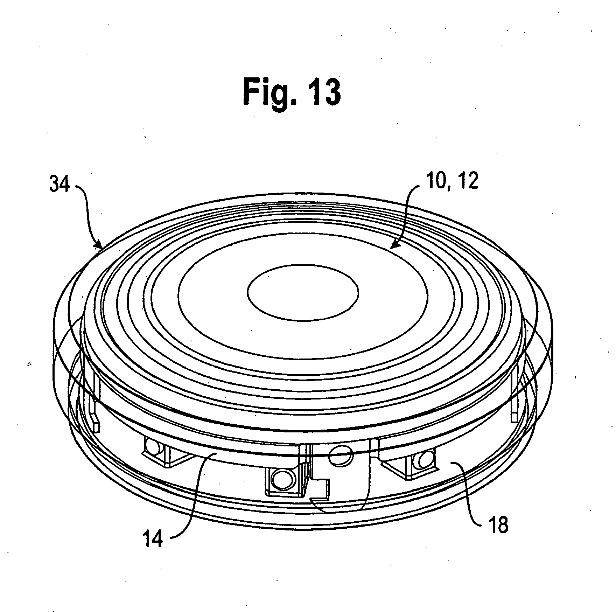

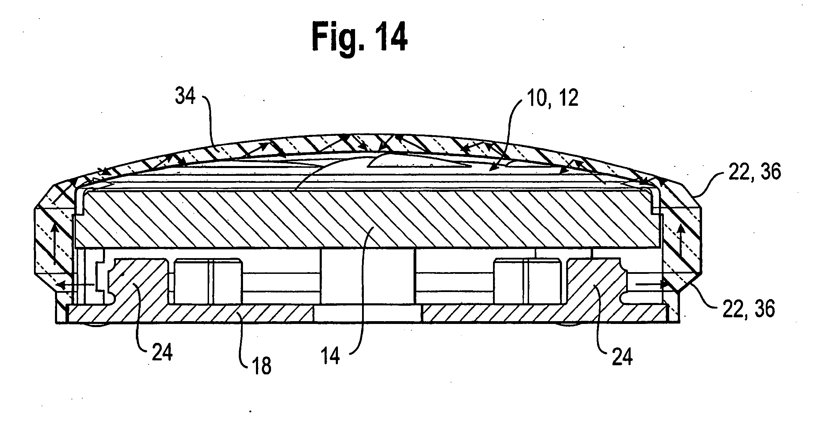

Eine nicht erfindungsgemäßen dritte Ausführungsform ist in den Figuren 12 bis 16 dargestellt. Die in Figur 12 in Explosionsansicht und in den Figuren 13 und 14 im zusammengebauten Zustand gezeigte Baugruppe umfaßt eine u. a. mit LEDs 24 bestückte lichtundurchlässige Leiterplatte 18, einen lichtundurchlässigen Träger 14, ein lichtundurchlässiges Emblem 10 und eine transparente Kunststoff-Umspritzung 34 über dem Emblem 10.

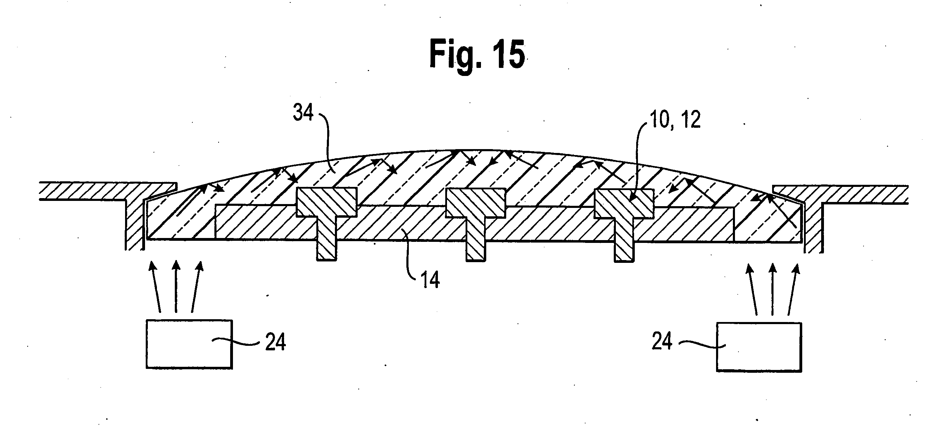

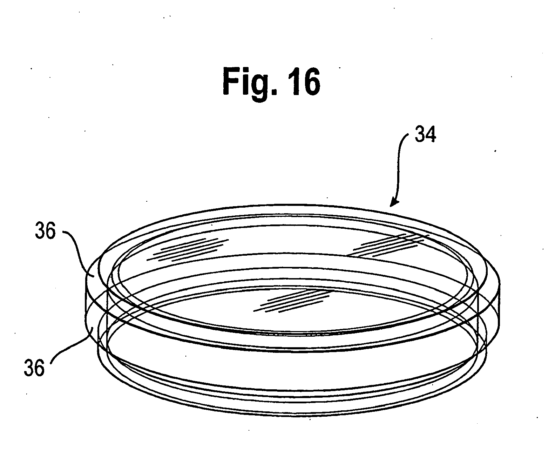

Diese Baugruppe zeichnet sich dadurch aus, daß das Licht der LEDs 24 durch geeignet angeordnete Umlenkflächen 22 seitlich am Träger 14 und am Emblem 10 vorbei in die transparente Umspritzung 34 eingekoppelt wird, wie in den Figuren 14 und 15 gezeigt. In der Umspritzung 34 erfolgt eine Umlenkung an deren Fasen 36 (siehe Figur 16). Das (zumindest teilweise) an der inneren Oberfläche der Umspritzung 34 reflektierte Licht beleuchtet dann das Emblem 10.

Bei einem nicht vollflächigen Emblem 10 kann das Licht (zusätzlich) auch zwischen den Emblemstrukturen hindurch in die transparente Umspritzung 34 eingekoppelt werden. In diesem Fall sind im Träger 14 entsprechende Durchbrüche vorgesehen.

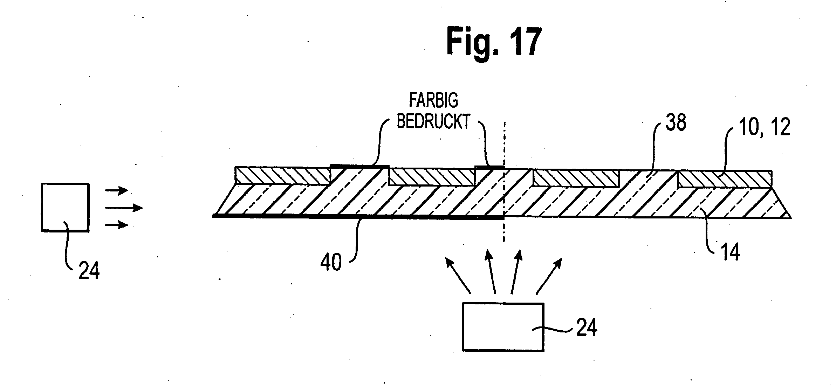

Ein weiteres Beleuchtungskonzept ist in Figur 17 gezeigt. Diese erfindungsgemäße Baugruppe umfaßt einen transparenten Träger 14, der von einer Seite von einer oder mehreren LEDs 24 beleuchtet wird. Die andere Seite des Trägers 14 ist entsprechend dem aufliegenden lichtundurchlässigen Emblem 10 strukturiert. Das Licht kann somit nur durch die erhöhten Strukturen 38 der Trägeroberfläche austreten.

Wie in der linken Hälfte der Figur 17 angedeutet, kann das Licht auch von der Seite in den transparenten Träger 14 eingekoppelt werden. Die nicht sichtbare Oberfläche des Trägers 14 kann mit einer Reflexionsfolie 40 oder einem reflektierenden Lack beschichtet sein. Die erhöhten Strukturen 38 der sichtbaren Oberfläche können bedruckt sein, um einen bestimmten Beleuchtungseffekt zu erzielen.

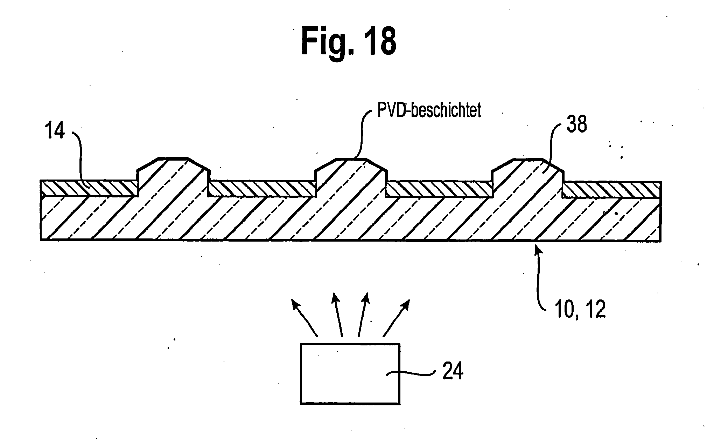

Das in Figur 18 dargestellte Beleuchtungskonzept mit eines erfindungsgemäßen Baugruppe ist dem zuvor beschriebenen ähnlich, wobei hier Träger und Emblem vertauscht sind, d. h. der Träger 14 ist auf der dem Betrachter zugewandten Seite angeordnet, und das Emblem 10 hat erhöhte Strukturen 38. Dementsprechend ist hier das Emblem 10 transparent und der Träger 14 lichtundurchlässig. Die erhöhten Strukturen 38 des Emblems 10 sind PVD-beschichtet nach Art eines venezianischen Spiegels. Das Licht der LED(s) 24 tritt von der dem Betrachter abgewandten Seite in das Emblem 10 und kann durch die erhöhten Strukturen 38 austreten. Umgekehrt kann aber der Betrachter nicht durch die PVD-Beschichtung hindurchsehen.

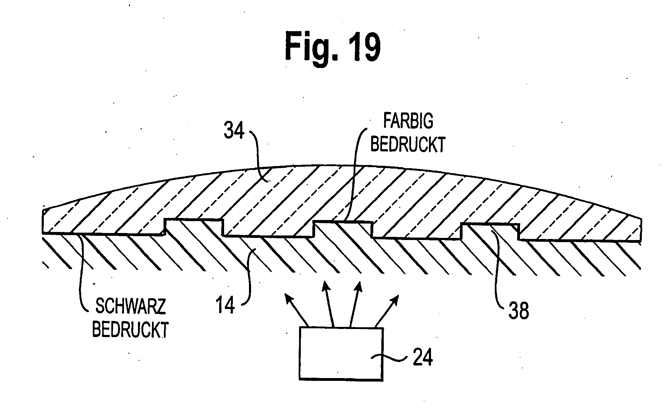

Ein letztes Beleuchtungskonzept mit eines erfindungsgemäßen Baugruppe ist in Figur 19 dargestellt. Ein transparenter Träger 14 weist erhöhte Strukturen 38 auf, die dem positiven oder negativen Logo 12 entsprechen, das beleuchtet dargestellt werden soll. Der Träger 14 ist mit einem transparenten Kunststoff 34 umspritzt, so daß die Logostruktur geschützt ist. Das Licht einer oder mehrerer LEDs 24 wird von der anderen Seite in den Träger 14 eingekoppelt. Der Träger 14 ist auf der dem Betrachter zugewandten Seite mit Ausnahme der erhöhten Strukturen 38 schwarz bedruckt, so daß dort kein Licht austreten kann. Die erhöhten Strukturen 38 sind dagegen farbig bedruckt und lichtdurchlässig, so daß das Logo 12 farbig beleuchtet erscheint.

## Patentansprüche

1. Baugruppe, geeignet zur beleuchteten Darstellung eines Logos (12) in einem Kraftfahrzeug, mit einem transparenten Träger (14) und wenigstens einer Lichtquelle (24), die hinter oder neben dem Träger (14) angeordnet ist, **dadurch gekennzeichnet, daß** der Träger (14) auf einer dem Logo (12) zugewandten Seite dem Logo (12) entsprechend erhöhte Strukturen (38) aufweist und dass das Licht nur durch die erhöhten Strukturen (38) der Trägeroberfläche austreten kann.

2. Baugruppe nach Anspruch 1, mit einem das Logo (12) darstellenden Emblem (10).

3. Baugruppe nach Anspruch 2, **dadurch gekennzeichnet, daß** das Emblem (10) lichtundurchlässig ist.

4. Baugruppe nach Anspruch 3, **dadurch gekennzeichnet, daß** das Emblem (10) auf dem transparenten Träger (14) aufliegt.

5. Baugruppe nach einem der vorhergehenden Ansprüche, **dadurch gekennzeichnet, daß** die dem Logo (12) zugewandte Seite des Trägers (14) teilweise bedruckt ist.

6. Baugruppe nach einem der vorhergehenden Ansprüche, **dadurch gekennzeichnet, daß** das Licht der Lichtquelle (24) seitlich in den Träger (14) eingekoppelt wird.

7. Baugruppe nach einem der vorhergehenden Ansprüche, **dadurch gekennzeichnet, daß** die dem Logo (12) zugewandte Oberfläche des Trägers (14) mit einer Reflexionsfolie (40) oder einem reflektierenden Lack beschichtet ist.

8. Baugruppe nach einem der vorhergehenden Ansprüche, **dadurch gekennzeichnet, daß** die Strukturen (38) das Logo (12) darstellen.

9. Baugruppe nach Anspruch 8, **dadurch gekennzeichnet, daß** der Träger (14) auf der dem Betrachter zugewandten Seite mit Ausnahme der Strukturen (38) lichtundurchlässig bedruckt oder beschichtet ist.

10. Baugruppe nach Anspruch 8 oder 9, **dadurch gekennzeichnet, daß** die Strukturen (38) farbig bedruckt oder beschichtet und lichtdurchlässig sind.

11. Baugruppe nach einem der Ansprüche 8 bis 10, **dadurch gekennzeichnet, daß** der Träger (14) mit einem transparenten Kunststoff (34) umspritzt ist.

12. Baugruppe nach einem der vorhergehenden Ansprüche, **dadurch gekennzeichnet, daß** ein sichtbares transparentes Teil der Baugruppe wenigstens teilweise nach einem Verfahren der physikalischen Gasabscheidung (PVD) beschichtet ist.

13. Baugruppe, geeignet zur beleuchteten Darstellung eines Logos (12) in einem Kraftfahrzeug, mit einem Träger (14) und wenigstens einer Lichtquelle (24), die hinter oder neben dem Träger (14) angeordnet ist, sowie einem das Logo (12) darstellenden Emblem (10), **dadurch gekennzeichnet, daß** der Träger (14) lichtundurchlässig und das Emblem (10) transparent ist, und daß das Emblem (10) auf der der Lichtquelle (24) zugewandten Seite des Trägers (14) angeordnet ist und erhöhte Strukturen (38) aufweist, die durch den Träger hindurchragen, wobei das Licht durch die erhöhten Strukturen des Emblems (10) austreten kann.

14. Airbagabdeckung, geeignet für ein Kraftfahrzeug, mit einer Baugruppe nach einem der vorhergehenden Ansprüche.

## Claims

1. An assembly suited for an illuminated representation of a logo (12) in an automotive vehicle, comprising a transparent carrier (14) and at least one light source (24) arranged behind or beside the carrier (14), **characterized in that** the carrier (14) includes elevated structures (38) corresponding to the logo (12) on a side facing the logo (12) and that the light can only emerge through the elevated structures (38) of the carrier surface.

2. An assembly according to claim 1, comprising an emblem (10) representing the logo (12).

3. An assembly according to claim 2, **characterized in that** the emblem (10) is opaque.

4. An assembly according to claim 3, **characterized in that** the emblem (10) bears on the transparent carrier (14).

5. An assembly according to any one of the preceding claims, **characterized in that** the side of the carrier (14) facing the logo (12) is partly printed.

6. An assembly according to any one of the preceding claims, **characterized in that** the light of the light source (24) is fed laterally into the carrier (14).

7. An assembly according to any one of the preceding claims, **characterized in that** the surface of the carrier (14) facing the logo (12) is coated with a reflective film (40) or a reflecting lacquer.

8. An assembly according to any one of the preceding claims, **characterized in that** the structures (38) represent the logo (12).

9. An assembly according to claim 8, **characterized in that** on the side facing the viewer the carrier (14) includes an opaque printing or coating with the exception of the structures (38).

10. An assembly according to claim 8 or 9, **characterized in that** the structures (38) are color-printed or color-coated and are transparent.

11. An assembly according to any one of the claims 8 to 10, **characterized in that** a transparent plastic material (34) is injection-molded around the carrier (14).

12. An assembly according to any one of the preceding claims, **characterized in that** a visible transparent member of the assembly is coated at least partly in accordance with a method of physical gas separation (PVD).

13. An assembly suited for an illuminated representation of a logo (12) in an automotive vehicle, comprising a carrier (14) and at least one light source (24) arranged behind or beside the carrier (14) as well as an emblem (10) representing the logo (12), **characterized in that** the carrier (14) is opaque and the emblem (10) is transparent and that the emblem (10) is arranged on the side of the carrier (14) facing the light source (24) and includes elevated structures (38) protruding through the carrier, wherein the light can emerge through the elevated structures of the emblem (10).

14. An airbag cover suited for an automotive vehicle comprising an assembly according to any one of the preceding claims.

## Revendications

1. Ensemble destiné à l'affichage lumineux d'un logo (12) dans un véhicule motorisé, avec un support transparent (14) et au moins une source lumineuse (24), qui est située derrière ou à côté du support (14), **caractérisé en ce que** le support (14) d'un des logo (12) offre des structures rehaussées (38) du côté proche du logo (12) correspondant et de sorte que la lumière ne puisse sortir qu'au travers des structures rehaussées (38) de la surface du support.

2. Ensemble selon la revendication 1 avec une partie du logo (12) représentant un emblème (10).

3. Ensemble selon la revendication 2, **caractérisé en ce que** l'emblème (10) est opaque.

4. Ensemble selon la revendication 3 **caractérisé en ce que** l'emblème repose sur le support (14) transparent.

5. Ensemble selon l'une des revendications précédentes, **caractérisé en ce que** le coté du support (14) tourné vers le logo (12) est imprimé partiellement.

6. Ensemble selon l'une des revendications précédentes, **caractérisé en ce que** la lumière issue de la source lumineuse (24) arrive latéralement dans le support (14).

7. Ensemble selon l'une des revendications précédentes, **caractérisé en ce que** la surface du support (14) tournée vers le logo (12) est revêtue d'un film (40) ou d'une vernis réfléchissant.

8. Ensemble selon l'une des revendications précédentes, **caractérisé en ce que** les structures (38) représentent le logo (12).

9. Ensemble selon la revendication 8, **caractérisé en ce que** le support (14) est opaque par impression ou revêtement du côté tourné vers l'observateur, à l'exception des structures (38).

10. Ensemble selon les revendications 8 ou 9 **caractérisé en ce que** les structures sont imprimées en couleurs ou revêtues et sont translucides.

11. Ensemble selon les revendications 8 à 10 **caractérisé en ce que** le support (14) est injecté avec un plastique (34) transparent.

12. Ensemble selon l'une des revendications précédentes, **caractérisé en ce que** une partie visible et transparente de l'ensemble est revêtue au moins partiellement par procédé de dépôt par condensation de vapeur (PVD).

13. Ensemble destiné à l'affichage lumineux d'un logo (12) dans un véhicule motorisé, avec un support transparent (14) et au moins une source lumineuse (24), qui est située derrière ou à côté du support (14), ainsi qu'un logo (12) affichant un emblème (10), **caractérisé en ce que** le support (14) est opaque alors que l'emblème (10) est transparent, que l'emblème (10) est situé sur la face du support (14) proche de la source lumineuse et offre des structures rehaussées, qui s'élèvent au travers du support, de sorte que la lumière puisse sortir au travers des dites structures rehaussées de l'emblème (10).

14. Couvercle d'airbag, destiné à un véhicule motorisé, avec un ensemble selon l'une des revendications précédentes.
